(19) Europäisches Patentamt
European Patent Office
Office européen des brevets

(11) EP 3 630 486 B1

(12) # EUROPEAN PATENT SPECIFICATION

(45) Date of publication and mention of the grant of the patent:
**30.08.2023 Bulletin 2023/35**

(21) Application number: **18719935.1**

(22) Date of filing: **03.05.2018**

(51) International Patent Classification (IPC):
***B32B 27/08*** *(2006.01)* ***B32B 27/32*** *(2006.01)*

(52) Cooperative Patent Classification (CPC):
(C-Sets available)
**B32B 27/08; B32B 27/32; C08L 23/16;**
B32B 2250/40; B32B 2270/00; B32B 2307/30; B32B 2307/40; B32B 2307/518; B32B 2307/714; B32B 2307/732; C08L 2205/03 (Cont.)

(86) International application number:
**PCT/EP2018/061286**

(87) International publication number:
**WO 2018/215184 (29.11.2018 Gazette 2018/48)**

(54) **MULTILAYER FILM COMPRISING A POLYOLEFIN COMPOSITION**

MEHRSCHICHTIGE FOLIE MIT EINER POLYOLEFINZUSAMMENSETZUNG

FILM MULTICOUCHES COMPRENANT UNE COMPOSITION DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.05.2017 EP 17172379**

(43) Date of publication of application:
**08.04.2020 Bulletin 2020/15**

(73) Proprietor: **Basell Poliolefine Italia S.r.l.**
**20121 Milano (IT)**

(72) Inventors:
- **PERDOMI, Gianni**
  **44122 Ferrara (IT)**
- **GALVAN, Monica**
  **44122 Ferrara (IT)**
- **CAVALIERI, Claudio**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 540 499**
**WO-A1-2016/207235**
**WO-A1-2016/207236**
**WO-A1-2017/202597**
**WO-A1-2017/202600**

EP 3 630 486 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/16, C08L 23/0815, C08L 23/12**

## Description

### FIELD OF THE INVENTION

The present disclosure relates to multilayer films, that are cast or blown, having excellent optical properties. In some embodiments, the multilayer films comprise a polyolefin blend containing propylene based polymers and linear low-density polyethylene (LLDPE).

### BACKGROUND OF THE INVENTION

Films made of propylene copolymers or terpolymers are known in the relevant art.
For instance, WIPO Pat. App. Pub. No. WO 03/076511 describes a masterbatch composition comprising (all percentages by weight):

1) 10-50%, of a crystalline propylene homopolymer;
2) 50-90%, of a blend consisting of:

    a) a copolymer of ethylene and one or more a-olefin(s) and containing 10-40%, of said C4-C10 a-olefin(s) (copolymer (a)), and
    b) an amorphous copolymer of propylene and ethylene (copolymer (b)).

Component a) has a xylene soluble content ranging from 30 to 80%. This document does not relate to film obtainable by this composition.
EP 2 540 499 relates to a multy layer BOPP film wherein the sealing layer comprises a propylene copolymer composition comprising a polypropylene (A) and a polypropylene (B).
WO2016/207236 relates to a composition to be used as impact modifier comprising a propylene based polymer, a copolymer of ethylene and a copolymer of ethylene and propylene.
WO2016/207235 relates to a composition to be used as impact modifier comprising a propylene based polymer, an ethylene homopolymer and a copolymer of ethylene and propylene.

### SUMMARY OF THE INVENTION

The present disclosure relates to a composition comprising propylene-base polymers and LLDPE that can be used for the production of cast or blown multilayer films as defined in the appended claims and having excellent optical properties.
Thus the present disclosure is directed to a multilayer film preferably a blow multilayer film wherein at least one layer comprises a polyolefin composition comprising:

A) 5-35% by weight of a propylene homopolymer or a propylene ethylene copolymer containing 90% by weight or more of propylene units; component A) containing 10% by weight or less of a fraction soluble in xylene at 25°C (XSA), both the amount of propylene units and of the fraction XSA being referred to the weight of A);
B) 20-50% by weight; of a copolymer of ethylene and a C3-C8 alpha-olefin containing from 0.1% to 20% by weight of alpha-olefin units and containing 25% by weight or less; of a fraction soluble in xylene at 25°C (XSB), both the amount of alpha-olefin units and of the fraction XSB being referred to the weight of (B); and
C) 30-60% by weight of a copolymer of ethylene and propylene containing from 25% to 75% by weight of ethylene units and containing from 40% to 95% by weight of a fraction soluble in xylene at 25°C (XSC), both the amount of ethylene units and of the fraction XSC being referred to the weight of (C);
the amounts of (A), (B) and (C) being referred to the total weight of (A) + (B) + (C), the sum of the amount of (A) + (B) + (C) being 100, wherein the polyolefin composition has a melt flow rate (ISO1133, 230°C/2.16 kg) comprised between 0.5 to 25/g/10 min.

### DETAILED DESCRIPTION OF THE INVENTION

Thus the present disclosure is directed to a multilayer film preferably a multilayer blow film wherein at least one layer preferably the core layer comprises a polyolefin composition comprising:

A) 5-35% by weight; preferably 10-30 % by weight; more preferably 15-23%by weight of a propylene homopolymer containing or a propylene ethylene copolymer containing 90% by weight or more preferably 95 % by weight or more;

preferably 97 % by weight or more of propylene units; component A) containing 10% by weight or less preferably 8 wt% or less more preferably 6 wt% or less of a fraction soluble in xylene at 25°C ($XS_A$), both the amount of propylene units and of the fraction $XS_A$ being referred to the weight of A);

B) 20-50% by weight; preferably 25-45% by weight; more preferably 30-40 % by weight of a copolymer of ethylene and a $C_3$-$C_8$ alpha-olefin containing from 0.1% to 20% by weight; preferably from 5% to 15 % by weight; more preferably from 7 % to 12 % by weight of alpha-olefin units and containing 25% by weight or less; preferably from 20% by weight or less; preferably 17% by weight or less of a fraction soluble in xylene at 25°C (XSa), both the amount of alpha-olefin units and of the fraction $XS_B$ being referred to the weight of (B); and

C) 30-60% by weight; preferably 35-55% by weight; more preferably 40-50 % by weight of a copolymer of ethylene and propylene containing from 25% to 75% by weight; preferably from 37% to 65% by weight; more preferably from 45% to 58% by weight of ethylene units and containing from 40% to 95% by weight of a fraction soluble in xylene at 25°C (XSc), both the amount of ethylene units and of the fraction XSc being referred to the weight of (C);

the amounts of (A), (B) and (C) being referred to the total weight of (A) + (B) + (C), the sum of the amount of (A) + (B) + (C) being 100.

Component (A) preferably has the melt flow rate (230°C/2.16 kg) ranging between 50 and 200 g/10 min; more preferably between 80 and 170 g/10 min.

Components (A)+ (B) blended together have the melt flow rate (230°C/2.16 kg) comprised between 0.1 and 70 g/10 min. preferably between 1 and 50 g/10 min; more preferably between 8 and 40 g/10 min.

Preferably component B) has a density (determined according to ISO 1183 at 23°C) of from 0.940 to 0.965 $g/cm^3$. Component B) is an ethylene copolymer containing $C_3$-$C_8$ alpha-olefin derived units. Specific examples of such alpha-olefin comonomers are propylene, 1-butene, 1-pentene, 4-methyl-1-pentene, 1-hexene and 1-octene; 1-butene 1-hexene and 1-octene being preferred; 1-butene being the most preferred.

The polyolefin composition has a melt flow rate (230°C/2.16 kg) comprised between 0.5 to 25 g/10min preferably from 0.8 to 20.0g/10min; even more preferably from 1.0 to 18.0g/10min..

Preferably the polyolefin composition has an intrinsic viscosity [$\eta$] (measured in tetrahydronaphthalene at 135 °C) of the xylene soluble fraction at 25°C comprised between 1.5 to 4.0 dl/g preferably the intrinsic viscosity is comprised between 2.0 and 3.5 dl/g; more preferably the intrinsic viscosity is comprised between 2.1 and 2.8 dl/g.

For the present disclosure, the term "copolymer" comprises polymers containing two kinds of comonomers, such as propylene and ethylene or ethylene and 1-butene.

The polyolefin compositions of the present disclosure are useful in the production of multilayer films, such as cast films, blown films and biaxially oriented films (BOPPs). A multilayer film comprising a polyolefin composition disclosed in the present application has excellent optical properties, including a very low haze value.

The multilayer films of the present disclosure are characterized by having at least a layer, preferably at least one of the core layers comprising the polyolefin composition of the present disclosure. The remaining layers can be formed of any material known in the art for use in multilayer films or in laminated products. Thus, for example, each layer can be formed of a polypropylene homopolymer or copolymer or polyethylene homopolymer or copolymer or other kind of polymers such as EVA.

The combination and number of layers of the multilayer structures described herein are not limited. For instance, the multilayer structure can comprises 3-11 layers or more, including 3-9 layers, 3-7 layers, and 3-5 layers, with combinations including A/B/A, A/B/C, A/B/C/B/A, and A/B/C/D/C/B/A, provided that at least one core layer such as B or D comprises a polyolefin composition of the present disclosure.

In certain embodiments, the number of layers of the multilayer film of the present disclosure are 3 or 5, wherein at least one core layer comprises a polyolefin composition of the present disclosure. For instance, structures such as A/B/A or A/B/C, wherein B is a polyolefin composition of the present disclosure, are possible.

Particularly preferred multilayer films are made via blown process. Particularly preferred are multilayer thin films having a thickness lower than 30 microns, preferably lower than 20 microns.

It has been found that the polyolefin composition can be prepared by a sequential polymerization, comprising at least three sequential steps, wherein components (A), (B) and (C) are prepared in separate subsequent steps, operating in each step, except the first step, in the presence of the polymer formed and the catalyst used in the preceding step. The catalyst is added only in the first step, however its activity is such that it is still active for all the subsequent steps.

The polymerization, which can be continuous or batch, is carried out following known techniques and operating in liquid phase, in the presence or not of inert diluent, or in gas phase, or by mixed liquid-gas techniques. It is preferable to carry out the polymerization in gas phase.

Reaction time, pressure and temperature relative to the polymerization steps are not critical, however it is best if the temperature is from 50 to 100 °C. The pressure can be atmospheric or higher.

The regulation of the molecular weight is carried out by using known regulators, hydrogen in particular.

The said polymerizations are preferably carried out in the presence of a Ziegler-Natta catalyst. Typically a

Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on MgCl2.

Particularly preferred catalysts comprise the product of the reaction of said organometallic compound of group 1, 2 or 13 of the Periodic Table of elements, with a solid catalyst component comprising a Ti compound and an electron donor compound supported on MgCl2.

Preferred organometallic compounds are the aluminum alkyl compounds.

Thus in a preferred embodiment, the polymer composition B) of the present invention is obtainable by using a Ziegler-Natta polymerization catalyst, more preferably a Ziegler-Natta catalyst supported on MgCl2, even more preferably a Ziegler-Natta catalyst comprising the product of reaction of:

1) a solid catalyst component comprising a Ti compound and an electron donor (internal electron-donor) supported on MgCl2;
2) an aluminum alkyl compound (cocatalyst); and, optionally,
3) an electron-donor compound (external electron-donor).

The solid catalyst component (1) contains as electron-donor a compound generally selected among the ethers, ketones, lactones, compounds containing N, P and/or S atoms, and mono- and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters, preferably diisobutyl phthalate, and succinic acid esters.

Suitable succinic acid esters are represented by the formula (I):

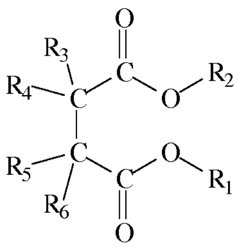

(I)

wherein the radicals R1 and R2, equal to or different from each other, are a C1-C20 linear or branched alkyl, alkenyl, cycloalkyl, aryl, arylalkyl or alkylaryl group, optionally containing heteroatoms; the radicals R3 to R6 equal to or different from each other, are hydrogen or a C1-C20 linear or branched alkyl, alkenyl, cycloalkyl, aryl, arylalkyl or alkylaryl group, optionally containing heteroatoms, and the radicals R3 to R6 which are joined to the same carbon atom can be linked together to form a cycle.

R1 and R2 are preferably C1-C8 alkyl, cycloalkyl, aryl, arylalkyl and alkylaryl groups. Particularly preferred are the compounds in which R1 and R2 are selected from primary alkyls and in particular branched primary alkyls. Examples of suitable R1 and R2 groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R3 to R5 are hydrogen and R6 is a branched alkyl, cycloalkyl, aryl, arylalkyl and alkylaryl radical having from 3 to 10 carbon atoms. Another preferred group of compounds within those of formula (I) is that in which at least two radicals from R3 to R6 are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R3 and R5 or R4 and R6 are particularly preferred.

Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical).

Examples of the said silicon compounds are those of formula R1aR2bSi(OR3)c, where a and b are integer numbers from 0 to 2, c is an integer from 1 to 3 and the sum (a+b+c) is 4; R1, R2 and R3 are alkyl, cycloalkyl or aryl radicals with 1-18 carbon atoms optionally containing heteroatoms.

Useful examples of silicon compounds are (tert-butyl)2Si(OCH3)2, (cyclohexyl)(methyl)Si (OCH3)2, (phenyl)2Si(OCH3)2 and (cyclopentyl)2Si(OCH3)2.

The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

The following examples are given in order to illustrate, but not limit the present disclosure.

## EXAMPLES

### CHARACTERIZATIONS

#### Xylene-soluble (XS) Fraction at 25 °C

Solubility in xylene: Determined as follows:

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.

The content of the xylene-soluble fraction is expressed as a percentage of the original 2.5 grams and then, by the difference (complementary to 100%), the xylene insoluble percentage (%);

XS of components B) and C) have been calculated by using the formula:

$$XS_{tot}=WaXS_A+WbXS_B+WcXS_C$$

wherein Wa, Wb and Wc are the relative amount of components A, B and C, respectively, and (A+B+C=1).

#### Melt Flow Rate (MFR)

Measured according to ISO 1133 at 230 °C with a load of 2.16 kg, unless otherwise specified.

#### Intrinsic Viscosity (IV)

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.

The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [$\eta$].

#### Comonomer ($C_2$ and $C_4$) Content

The content of comonomers was determined by infrared (IR) spectroscopy by collecting the IR spectrum of the sample vs. an air background with a Fourier transform infrared spectrometer (FTIR). The instrument data acquisition

parameters were:

- purge time: 30 seconds minimum
- collect time: 3 minutes minimum
- apodization: Happ-Genzel
- resolution: 2 $cm^{-1}$.

*Sample Preparation* - Using a hydraulic press, a thick sheet was obtained by compression molding about 1 g of sample between two aluminum foil sheets. A small portion was cut from the resulting sheet to mold a film. The film thickness was set in order to have a maximum absorbance of the $CH_2$ absorption band at -720 $cm^{-1}$ of 1.3 a.u. (% Transmittance > 5%). The molding conditions were carried out at a temperature of about 180 ± 10 °C (356 °F) and a pressure of about 10 kg/$cm^2$ (142.2 psi) for about one minute. The pressure was then released, the sample was removed from the press and cooled to room temperature. The spectrum of the pressed film sample was recorded as a function of absorbance vs. wavenumbers ($cm^{-1}$). The following measurements were used to calculate ethylene ($C_2$) and 1-butene ($C_4$) contents:

a) Area (At) of the combination absorption bands between 4482 and 3950 $cm^{-1}$, which is used for spectrometric normalization of film thickness.
b) Area ($A_{C2}$) of the absorption band due to methylenic sequences ($CH_2$ rocking vibration) in a range of 660-790 $cm^{-1}$ after a proper digital subtraction of an isotactic polypropylene (IPP) and a $C_2C_4$ references spectrum.
c) The factor of subtraction ($FCR_{C4}$) between the spectrum of the polymer sample and the $C_2C_4$ reference spectrum: The reference spectrum is obtained by performing a digital subtraction of a linear polyethylene from a $C_2C_4$ copolymer in order to extract the $C_4$ band (ethyl group at -771 $cm^{-1}$).

The ratio $A_{C2}/A_t$ is calibrated by analyzing ethylene-propylene standard copolymers of known compositions, as determined by NMR spectroscopy.
The assignments of the spectra, triad distribution and composition were made according to Kakugo ("Carbon-13 NMR determination of monomer sequence distribution in ethylene-propylene copolymers prepared with δ-titanium trichloride- diethylaluminum chloride," M. Kakugo, Y. Naito, K. Mizunuma and T. Miyatake, *Macromolecules,* 1982, 15, 1150).
In order to calculate the ethylene ($C_2$) and 1-butene ($C_4$) content, calibration curves were obtained by using samples of known amounts of ethylene and 1-butene that were detectable by $^{13}C$ NMR.
Calibration for ethylene - A calibration curve was obtained by plotting $A_{C2}/A_t$ versus ethylene molar percent ($\%C_{2m}$), and the coefficients $a_{C2}$, $b_{C2}$ and $c_{C2}$ were then calculated via linear regression.
Calibration for 1-butene - A calibration curve was obtained by plotting $FCR_{C4}/A_t$ versus butane molar percent ($\%C_4m$), and the coefficients $a_{C4}$, $b_{C4}$ and $C_{C4}$ were then calculated via linear regression.
The spectra of the unknown samples are recorded and then (At), ($A_{C2}$) and ($FCR_{C4}$) of the unknown sample are calculated.
The ethylene content (% molar fraction $C_{2m}$) of the sample was calculated as follows:

$$\%C2m = -b_{C2} + \frac{\sqrt{b_{C2}^2 - 4 \cdot a_{C2} \cdot (c_{C2} - \frac{A_{C2}}{A_t})}}{2 \cdot a_{C2}}$$

The 1-butene content (% molar fraction $C_{4m}$) of the sample was calculated as follows:

$$\%C4m = -b_{C4} + \frac{\sqrt{b_{C4}^2 - 4 \cdot a_{C4} \cdot (c_{C4} - \frac{FCR_{C4}}{A_t})}}{2 \cdot a_{C4}}$$

where $a_{C4}$, $b_{C4}$, $c_{C4}$ $a_{C2}$, $b_{C2}$, $c_{C2}$ are the coefficients of the two calibrations.
Changes from mol% to wt% are calculated by using molecular weights of the compound(s).
Amount (wt%) of comonomer of components A-C are calculated by using the following relationship:

$$Com_{tot}=WaCom_A+WbCom_B+WcCom_C$$

wherein Wa, Wb and Wc are the relative amount of components A, B and C, respectively, and (A+B+C=1).

$Com_{tot}$, $Com_A$, $Com_B$ and ComC are the amounts of comonomer in the total composition (tot) and in components A-C.

**Haze Determination**

Films with a thickness of 50 μm were prepared by extruding each test composition in a single screw Dr. Collin extruder (length/diameter ratio of screw: 1:25) at a film drawing speed of 7 m/min and a melt temperature of 210-250 °C.

50 μm film specimens were used. The haze value was measured using a Gardner photometric unit connected to a Hazemeter Type UX-10 or an equivalent instrument having a GE 1209 light source with filter "C". Reference samples of known haze were used for calibrating the instrument according to ASTM D1003.

Example 1 - Preparation of the Polyolefin Composition

**Catalyst precursor:**

The solid catalyst component used in the polymerization was a Ziegler-Natta catalyst component supported on magnesium chloride ($MgCl_2$) containing titanium and diisobutylphthalate as an internal donorand prepared as follows. An initial amount of micro spheroidal $MgCl_2 \cdot 2.8C_2H_5OH$ was prepared according to Example 2 of U.S. Pat. No. 4,399,054, but operating at 3,000 rpm instead of 10,000 rpm. The resulting adduct was subjected to thermal dealcoholation at increasing temperatures from 30-130 °C in a nitrogen current until the molar alcohol content per mol of Mg was about 1.16. Into a 1000 mL four-necked round flask, purged with nitrogen, 500 mL of $TiCl_4$ were introduced at 0 °C. While stirring, 30 grams of the microspheroidal $MgCl_2 \cdot 1.16C_2H_5OH$ adduct (prepared as described above) were added. The temperature was raised to 120 °C and kept at this value for 60 minutes. During the temperature increase, an amount of diisobutylphthalate was added to produce a Mg/ diisobutylphthalate molar ratio of about 18. After 60 minutes, the stirring was stopped, the liquid siphoned off and the treatment with TiCl4 was repeated at 100 °C for 1 hour in the presence of an amount of diisobutylphthalate to produce a Mg/ diisobutylphthalate molar ratio of about 27. The stirring was then stopped, the liquid siphoned off and the treatment with $TiCl_4$ was repeated at 100 °C for 30 min. After sedimentation and siphoning at 85 °C, the solid was washed six times with anhydrous hexane (6 x 100 ml) at 60 °C.

**Catalyst system and prepolymerization:**

Before introducing it into the polymerization reactors, the solid catalyst component described above was contacted at 30 °C for 9 minutes with aluminum triethyl (TEAL) and dicyclopentyldimethoxysilane (DCPMS) at a TEAL/DCPMS weight ratio of about 15 and in such a quantity that the TEAL/solid catalyst component weight ratio was about 4.

The catalyst system was then subjected to prepolymerization by maintaining it in a liquid propylene suspension at 50 °C for about 75 minutes before introducing it into the first polymerization reactor.

**Polymerization**

The polymerization was carried out in continuous mode in a series of three gas-phase reactors equipped with devices to transfer the product from the first reactor to the second one. A propylene-based polymer (A) was produced in the first gas phase polymerization reactor by feeding the prepolymerized catalyst system, hydrogen the molecular weight regulator) and propylene, all in the gas state, in a continuous and constant flow. The propylene-based polymer (A) coming from the first reactor was discharged in a continuous flow and, after having been purged of unreacted monomers, was introduced, in a continuous flow, into the second gas phase reactor, together with quantitatively constant flows of hydrogen and ethylene, all in the gas state. In the second reactor a copolymer of ethylene (B) was produced. The product coming from the second reactor was discharged in a continuous flow and, after having been purged of unreacted monomers, is introduced, in a continuous flow, into the third gas phase reactor, together with quantitatively constant flows of hydrogen, ethylene and propylene, all in the gas state. In the third reactor an ethylene-propylene polymer (C) was produced. Polymerization conditions, molar ratio of the reactants and compositions of the resulting copolymers are shown in Table 1. The polymer particles exiting the third reactor were subjected to a steam treatment to remove the reactive monomers and volatile substances and then dried. Thereafter the polymer particles were mixed with a stabilizing additive composition in a twin screw extruder Berstorff ZE 25 (length/diameter ratio of screws: 34) and

extruded under a nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition comprised the following components:

- 0.1% by weight of Irganox® 1010;
- 0.1% by weight of Irgafos® 168; and
- 0.04% by weight of DHT-4A (hydrotalcite);

where all percentage amounts refer to the total weight of the polymer and stabilizing additive composition.

Irganox® 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, and Irgafos® 168 is tris(2,4-di-tert.-butylphenyl)phosphite. The characteristics of the polymer composition, reported in Table 2, are obtained from measurements carried out on the extruded polymer, which constitutes the stabilized ethylene polymer composition according to certain embodiments disclosed herein.

Table 1 - Polymerization conditions

| Example | | 1 |
|---|---|---|
| 1st Reactor - component (A) | | |
| Temperature | °C | 60 |
| Pressure | barg | 16 |
| $H_2/C_3$- | mol. | 0.24 |
| Split | wt% | 22 |
| Xylene soluble of (A) ($XS_A$) | wt% | 4.2 |
| MFR of (A) | g/10 min | 110 |
| 2nd Reactor - component (B) | | |
| Temperature | °C | 80 |
| Pressure | barg | 18 |
| $H_2/C_2$- | mol. | 0.81 |
| $C_4$-/($C_2$- + $C_4$-) | mol. | 0.25 |
| $C_2$-/($C_2$- + $C_3$-) | mol. | 0.98 |
| Split | wt% | 32 |
| $C_2$- content of B * | wt% | 90 |
| $C_4$- content of B * | wt% | 10 |
| Xylene soluble of B ($XS_B$) * | wt% | 16.0 |
| Xylene soluble of (A + B) | wt% | 12.0 |
| MFR of (A + B) | g/10 min. | 35.9 |
| 3rd Reactor - component (C) | | |
| Temperature | °C | 65 |
| Pressure | barg | 18 |
| $H_2/C_2$- | mol. | 0.17 |
| $C_2$-/($C_2$- + $C_3$-) | mol. | 0.42 |

(continued)

| Example | | 1 |
|---|---|---|
| Split | wt% | 46 |
| $C_2$- content of C * | wt% | 52 |
| Xylene soluble of (C) (XSc)* | wt% | 83 |
| Notes: $C_2$- = ethylene (IR); $C_3$- = propylene (IR); $C_4$- = 1-butene (IR); split = amount of polymer produced in the concerned reactor. * Calculated values. | | |

The features of the polymer of Example 1 are reported in Table 2

Table 2

| Example | | 1 |
|---|---|---|
| component A | | |
| $C_2$ content | wt% | 0 |
| XSA | wt% | 4.2 |
| MFR | g/10 min | 110 |
| split | wt% | 22 |
| component B | | |
| XSB* | wt% | 16 |
| $C_2$ content* | wt% | 90.0 |
| $C_4$ content* | wt% | 10.0 |
| split | wt% | 32 |
| MFR of (A + B) | g/10 min | 35.9 |
| Component C | | |
| XSC* | wt% | 83 |
| $C_2$ content* | wt% | 52 |
| split | wt% | 46 |
| total composition | | |
| MFR | g/10 min | 1.61 |
| IV on soluble in Xylene | dl/g | 2.4 |
| $C_2$ = ethylene ; $C_4$ = 1-butene; * calculated | | |

Comparative Example 2 is a random propylene ethylene copolymer sold by LyondellBasell Industries under the tradename Clyrell® RC1890. Clyrell RC1890 is designed for the production of blown and cast films.

Comparative Example 3 is a commercial product sold under the tradename Adflex® Q100F by LyondellBasell Industries and it is mainly used for the extrusion of blown film.

**Multilayer Blow Film**

A/B/A blow films were produced by using the polymers of Example 1 and Comparative Examples 1-3. The thickness of the films was 12 microns, with the A layer being 3 microns and the B layer being 6 microns. The results of the analysis of the films are reported in Table 3.

Table 3

| | Film 1 | Film 2 | Film 3 |
|---|---|---|---|
| layer A | Comp. Ex. 2 | Comp. Ex. 2 | Comp. Ex. 2 |
| layer B | Ex. 1 | Comp. Ex. 2 | Comp. Ex. 3 |
| layer A | Comp. Ex. 2 | Comp. Ex. 2 | Comp. Ex. 2 |
| haze % on film | 2.4 | 15.1 | 27.9 |

As shown in Table 3, a multilayer film obtained with the polyolefin composition of the present disclosure exhibits significantly better haze values.

## Claims

1. A multilayer film multilayer film selected from cast multilayer film and blown blew multilayer film wherein at least one layer comprises a polyolefin composition comprising:

   A) 5-35% by weight of a propylene homopolymer or a propylene ethylene copolymer containing 90% by weight or more of propylene units; component A) containing 10% by weight or less of a fraction soluble in xylene at 25°C (XSa), both the amount of propylene units and of the fraction $XS_A$ being referred to the weight of A);
   B) 20-50% by weight; of a copolymer of ethylene and a $C_3$-$C_8$ alpha-olefin containing from 0.1% to 20% by weight of alpha-olefin units and containing 25% by weight or less; of a fraction soluble in xylene at 25°C (XSa), both the amount of alpha-olefin units and of the fraction $XS_B$ being referred to the weight of (B); and
   C) 30-60% by weight of a copolymer of ethylene and propylene containing from 25% to 75% by weight of ethylene units and containing from 40% to 95% by weight of a fraction soluble in xylene at 25°C (XSc), both the amount of ethylene units and of the fraction XSc being referred to the weight of (C);
   wherein the polyolefin composition has a melt flow rate (ISO 1133, 230°C/2.16 kg) comprised between 0.5 to 25 g/10 min;
   the amounts of (A), (B) and (C) being referred to the total weight of (A) + (B) + (C), the sum of the amount of (A) + (B) + (C) being 100.

2. The multilayer film according to claim 1 wherein:

   Component A ranges from 10 % by weight to 30 % by weight;
   Component B ranges from 25 % by weight to 45 % by weight; and
   Component C ranges from 35 % by weight to 55 % by weight.

3. The multilayer film according to claims 1 or 2 wherein

   Component A ranges from 15 % by weight to 25 % by weight;
   Component B ranges from 30 % by weight to 40 % by weight; and
   Component C ranges from 40 % by weight to 50 % by weight.

4. The multilayer film according to anyone of claims 1-3 wherein component A) is a polypropylene homopolymer.

5. The multilayer film according to anyone of claims 1-4 wherein component B) is a copolymer of ethylene and a $C_3$-$C_8$ alpha-olefin containing from 5% to 15 % by weight of alpha-olefin units.

6. The multilayer film according to anyone of claims 1-5 wherein component C) is a copolymer of ethylene and propylene containing from 37% to 65% by weight of ethylene units.

7. The multilayer film according to anyone of claims 1-6 wherein component (A) has the melt flow rate (ISO 1133, 230°C/2.16 kg) ranging between 50 and 200 g/10 min.

8. The multilayer film according to anyone of claims 1-7 wherein the core layer comprises a polyolefin composition of claims 1-7.

9. The multilayer film according to anyone of claims 1-8 having from 3 to 11 layers.

10. The multilayer film according to anyone of claims 1-9 having an A/B/A or A/B/C structure wherein the B component is the polyolefin composition of claims 1-9.

11. The multilayer film according to anyone of claims 1-10 being a blown film.

12. The multilayer film according to anyone of claims 1-11 being a blown film having a thickness lower than 30 microns.

**Patentansprüche**

1. Mehrschichtige Folie, die ausgewählt ist aus mehrschichtigen Gießfolien und mehrschichtigen Blasfolien, wobei mindestens eine Schicht eine Polyolefinzusammensetzung umfasst, welche umfasst:

   (A) 5 bis 35 Gew.% von einem Propylenhomopolymer oder Propylen-Ethylen-Copolymer, das 90 Gew.% oder mehr Propyleneinheiten enthält; wobei Komponente A) 10 Gew.% oder weniger von einer in Xylol bei 25 °C löslichen Fraktion ($XS_A$) enthält, wobei sich sowohl die Menge der Propyleneinheiten als auch diejenige der Fraktion $XS_A$ auf das Gewicht von A) beziehen;
   B) 20 bis 50 Gew.% eines Copolymers von Ethylen und einem $C_3$- bis Cs-alpha-Olefin, das 0,1 Gew.% bis 20 Gew.% alpha-Olefineinheiten enthält und 25 Gew.% oder weniger von einer in Xylol bei 25 °C löslichen Fraktion ($XS_B$) enthält, wobei sich sowohl die Menge der alpha-Olefineinheiten als auch diejenige der Fraktion XSs auf das Gewicht von (B) beziehen; und
   (C) 30 bis 60 Gew.% eines Copolymers von Ethylen und Propylen, das 25 Gew.% bis 75 Gew.% Ethyleneinheiten enthält und 40 Gew.% bis 95 Gew.% von einer in Xylol bei 25 °C löslichen Fraktion (XSc) enthält, wobei sich sowohl die Menge der Ethyleneinheiten als auch diejenige der Fraktion XSc auf das Gewicht von (C) beziehen;
   wobei die Polyolefinzusammensetzung eine Schmelzflussrate (ISO 1133, 230 °C/2,16 kg) hat, die zwischen 0,5 und 25 g/10 min liegt;
   die Mengen von (A), (B) und (C) sich auf das Gesamtgewicht von (A) + (B) + (C) beziehen, wobei die Summe der Mengen von (A), (B) und (C) 100 ergibt.

2. Mehrschichtige Folie nach Anspruch 1, wobei:

   Komponente A im Bereich von 10 Gew.% bis 30 Gew.% liegt;
   Komponente B im Bereich von 25 Gew.% bis 45 Gew.% liegt; und
   Komponente C im Bereich von 35 Gew.% bis 55 Gew.% liegt.

3. Mehrschichtige Folie nach Anspruch 1 oder 2, wobei:

   Komponente A im Bereich von 15 Gew.% bis 25 Gew.% liegt;
   Komponente B im Bereich von 30 Gew.% bis 40 Gew.% liegt; und
   Komponente C im Bereich von 40 Gew.% bis 50 Gew.% liegt.

4. Mehrschichtige Folie nach einem der Ansprüche 1 bis 3, wobei Komponente A) ein Polypropylenhomopolymer ist.

5. Mehrschichtige Folie nach einem der Ansprüche 1 bis 4, wobei Komponente B) ein Copolymer von Ethylen und einem $C_3$- bis Cs-alpha-Olefin ist, das 5 Gew.% bis 15 Gew.% alpha-Olefineinheiten enthält.

6. Mehrschichtige Folie nach einem der Ansprüche 1 bis 5, wobei Komponente C) ein Copolymer von Ethylen und Propylen ist, das 37 Gew.% bis 65 Gew.% Ethyleneinheiten umfasst.

7. Mehrschichtige Folie nach einem der Ansprüche 1 bis 6, wobei Komponente (A) eine Schmelzflussrate (ISO 1133, 230 °C/2,16 kg) im Bereich zwischen 50 und 200 g/10 min aufweist.

8. Mehrschichtige Folie nach einem der Ansprüche 1 bis 7, wobei die Kernschicht eine Polyolefinzusammensetzung der Ansprüche 1 bis 7 umfasst.

9. Mehrschichtige Folie nach einem der Ansprüche 1 bis 8 mit 3 bis 11 Schichten.

10. Mehrschichtige Folie nach einem der Ansprüche 1 bis 9 mit einer A/B/A- oder A/B/C-Struktur, wobei die B-Komponente die Polyolefinzusammensetzung der Ansprüche 1 bis 9 ist.

11. Mehrschichtige Folie nach einem der Ansprüche 1 bis 10, die eine Blasfolie ist.

12. Mehrschichtige Folie nach einem der Ansprüche 1 bis 11, die eine Blasfolie mit einer Dicke kleiner als 30 Mikrometer ist.

## Revendications

1. Film multicouche choisi parmi un film multicouche coulé et un film multicouche soufflé, au moins une couche comprenant une composition polyoléfinique comprenant :

   A) 5 à 35 % en poids d'un homopolymère de propylène ou d'un copolymère de propylène-éthylène contenant 90 % en poids ou plus de motifs de propylène ; le constituant A) contenant 10 % en poids ou moins d'une fraction soluble dans le xylène à 25 °C (XSa), à la fois la quantité de motifs de propylène et de la fraction $XS_A$ se rapportant au poids de A) ;
   B) 20 à 50 % en poids d'un copolymère d'éthylène et d'une alpha-oléfine en $C_3$-$C_8$ contenant 0,1 % à 20 % en poids de motifs d'alpha-oléfine et contenant 25 % en poids ou moins d'une fraction soluble dans le xylène à 25 °C (XSa), à la fois la quantité de motifs d'alpha-oléfine et de la fraction $XS_B$ se rapportant au poids de (B) ; et
   C) 30 à 60 % en poids d'un copolymère d'éthylène et de propylène contenant 25 % à 75 % en poids de motifs d'éthylène et contenant 40 % à 95 % en poids d'une fraction soluble dans le xylène à 25 °C (XSc), à la fois la quantité de motifs d'éthylène et de la fraction XSc se rapportant au poids de (C) ;
   la composition polyoléfinique présentant un indice de fluidité à chaud (ISO 1133, 230 °C/2,16 kg) compris entre 0,5 à 25 g/10 min ;
   les quantités de (A), (B) et (C) se rapportant au poids total de (A) + (B) + (C), la somme des quantités (A) + (B) + (C) valant 100.

2. Film multicouche selon la revendication 1 :

   le constituant A représentant 10 % en poids à 30 % en poids ;
   le constituant B représentant 25 % en poids à 45 % en poids ; et
   le constituant C représentant 35 % en poids à 55 % en poids.

3. Film multicouche selon les revendications 1 ou 2 :

   le constituant A représentant 15 % en poids à 25 % en poids ;
   le constituant B représentant 30 % en poids à 40 % en poids ; et
   le constituant C représentant 40 % en poids à 50 % en poids.

4. Film multicouche selon l'une quelconque des revendications 1 à 3, le constituant A) étant un homopolymère de polypropylène.

5. Film multicouche selon l'une quelconque des revendications 1 à 4, le constituant B) étant un copolymère d'éthylène et d'une alpha-oléfine en $C_3$-$C_8$ contenant 5 % à 15 % en poids de motifs d'alpha-oléfine.

6. Film multicouche selon l'une quelconque des revendications 1 à 5, le constituant C) étant un copolymère d'éthylène et de propylène contenant de 37 % à 65 % en poids de motifs d'éthylène.

7. Film multicouche selon l'une quelconque des revendications 1 à 6, le constituant (A) présentant un indice de fluidité à chaud (ISO 1133, 230 °C/2,16 kg) situé dans la plage entre 50 et 200 g/10 min.

8. Film multicouche selon l'une quelconque des revendications 1 à 7, la couche centrale comprenant une composition polyoléfinique selon les revendications 1 à 7.

9. Film multicouche selon l'une quelconque des revendications 1 à 8, qui comprend de 3 à 11 couches.

10. Film multicouche selon l'une quelconque des revendications 1 à 9, qui présente une structure A/B/A ou A/B/C, le constituant B étant la composition polyoléfinique selon les revendications 1 à 9.

11. Film multicouche selon l'une quelconque des revendications 1 à 10 qui est un film soufflé.

12. Film multicouche selon l'une quelconque des revendications 1 à 11 qui est un film soufflé présentant une épaisseur inférieure à 30 microns.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 03076511 A
- EP 2540499 A
- WO 2016207236 A
- WO 2016207235 A
- US 4399054 A
- EP 45977 A
- EP 361493 A
- EP 728769 A


### Non-patent literature cited in the description


- **HUGGINS, M.L.** *J. Am. Chem. Soc.,* 1942, vol. 64, 2716